# EUROPÄISCHE PATENTSCHRIFT

(11) **EP 3 769 112 B1**
(45) Veröffentlichungstag und Bekanntmachung des Hinweises auf die Patenterteilung: **28.01.2026**
(21) Anmeldenummer: 19716079.9
(22) Anmeldetag: 19.03.2019
(51) Int. Cl.: G01S 15/931, G01S 13/931, G01S 17/931, G01S 7/497, B60W 50/02, B60W 50/04, G01S 7/40, G01S 7/52

(54) **VERFAHREN UND VORRICHTUNG ZUM ÜBERWACHEN UND/ODER DETEKTIEREN EINER SENSORIK EINES FAHRZEUGS**
METHOD AND DEVICE FOR MONITORING AND/OR DETECTING A SENSOR SYSTEM OF A VEHICLE
PROCÉDÉ ET DISPOSITIF DE SURVEILLANCE ET/OU DE DÉTECTION D'UN ENSEMBLE DE CAPTEURS D'UN VÉHICULE

(30) Priorität: 21.03.2018 DE 102018106594
(43) Veröffentlichungstag der Anmeldung: 27.01.2021
(73) Patentinhaber: Jenoptik Robot GmbH, 40789 Monheim (DE)
(72) Erfinder: MAAG, Einar, 42659 Solingen (DE); KIENITZ, Stefan, 47249 Duisburg (DE)
(74) Vertreter: Waldauf, Alexander
(86) Internationale Anmeldenummer: PCT/EP2019/056832
(87) Internationale Veröffentlichungsnummer: WO 2019/180014

(56) Entgegenhaltungen:
- EP-A1- 2 637 012
- DE-A1- 102007 031 040
- DE-A1- 102014 013 236
- DE-A1- 102015 209 976

## Beschreibung

Die vorliegende Erfindung bezieht sich auf ein Verfahren und eine Vorrichtung zum Überwachen und/oder Detektieren einer Sensorik eines Fahrzeugs sowie auf eine Infrastrukturanlage, ein Fahrzeug oder ein Überwachungsfahrzeug mit einer entsprechenden Vorrichtung.

In Fahrzeugen wird eine Sensorik eingesetzt, deren korrekte Funktion sicherzustellen ist.

Die DE 10 2016 000 532 A1 schlägt dazu eine Kalibrierung einer Einrichtung eines Fahrzeugs, beispielsweise eines Tachometers, unter Verwendung eines Verkehrs-überwachungsgeräts vor.

Die DE 10 2007 031 040 A1 offenbart eine Prüfvorrichtung und ein Verfahren für ein Fahrerassistenzsystem eines Fahrzeugs. Die EP 2 637 012 A1 offenbart ein Verfahren zum Testen der Funktionsfähigkeit eines in einem Testfahrzeug verbauten Fahrerassistenzsystems. Die DE 10 2014 013 236 A1 zeigt eine Prüfvorrichtung zum automatisierten Prüfen einer Funktionsfähigkeit eines Fahrzeugs sowie ein entsprechendes Verfahren zum Betreiben einer Prüfvorrichtung. Die DE 10 2015 209 976 A1 offenbart eine Sicherheitsprüfung eines Fahrzeugs mit einem per Fernbedienung bedienbaren Assistenzsystem zum fahrerlosen Fahren.

Vor diesem Hintergrund schafft die vorliegende Erfindung ein verbessertes Verfahren und eine verbesserte Vorrichtung zum Überwachen und/oder Detektieren einer Sensorik eines Fahrzeugs sowie eine verbesserte Infrastrukturanlage, ein verbessertes Fahrzeug und ein verbessertes Überwachungsfahrzeug gemäß den Hauptansprüchen. Vorteilhafte Ausgestaltungen ergeben sich aus den Unteransprüchen und der nachfolgenden Beschreibung.

Ein Verfahren zum Überwachen und/oder Detektieren einer Sensorik eines Fahrzeugs umfasst die folgenden Schritte:
Ermitteln eines Parameterwerts unter Verwendung eines Antwortsignals; und

Bestimmen eines der Sensorik zuordenbaren Überwachungssignals unter Verwendung des Parameterwerts und eines vorbestimmten Reaktionswerts.

Das Antwortsignal kann gemäß unterschiedlicher Ausführungsformen zumindest ein von dem Fahrzeug oder einer Infrastrukturanlage ausgesendetes Signal repräsentieren. Das Antwortsignal kann ein ansprechend auf ein das Fahrzeug betreffendes Anregungsereignis ausgesandetes Signal repräsentieren. Ein solches Anregungsereignis kann temporär aktiv hervorgerufen werden, beispielsweise durch ein optisches Signal, oder dauerhaft vorhanden sein, beispielsweise in Form einer zu durchfahrenden Kurve. Auch kann das Antwortsignal ein beispielsweise fortwährend bei der Fahrt des Fahrzeugs ausgesendetes Signal repräsentieren, beispielsweise ein Signal eines Umfeldsensors oder einer Kommunikationseinrichtung des Fahrzeugs.

Gemäß einer Ausführungsform kann eine Sensorik eines Fahrzeugs vorteilhaft überwacht und/oder detektiert werden, indem die Reaktion der Sensorik auf ein Anregungsereignis ausgewertet wird. Dabei kann das Anregungsereignis auch durch eine extern zu dem Fahrzeug angeordnete Vorrichtung hervorgerufen werden, sodass eine fahrzeugunabhängige Überwachung durchgeführt werden kann.

Ein Verfahren zum Überwachen und/oder Detektieren einer Sensorik eines Fahrzeugs umfasst gemäß einer Ausführungsform die folgenden Schritte:
Bereitstellen eines Anregungssignals zum Bewirken eines Anregungsereignisses, das eine die Sensorik des Fahrzeugs einbeziehende Antwortreaktion des Fahrzeugs hervorruft;
Ermitteln eines Parameterwerts, der einen erfassten Wert eines Parameters der Antwortreaktion repräsentiert, unter Verwendung eines Antwortsignals, das beispielsweise eine von dem Fahrzeug ausgehende Strahlung repräsentiert; und
Bestimmen eines der Sensorik zuordenbaren Überwachungssignals unter Verwendung des Parameterwerts und eines vorbestimmten Reaktionswerts.

Unter einem Fahrzeug kann ein Straßenfahrzeug, beispielsweise ein autonom, teil-autonom oder manuell gesteuertes Kraftfahrzeug zur Personenbeförderung oder Lastbeförderung verstanden werden. Alternativ kann es sich um ein Luftfahrzeug oder ein Wasserfahrzeug handeln. Die Sensorik kann zumindest eine Sensoreinrichtung umfassen. Beispielsweise kann die Sensorik ausgebildet sein, um ein Umfeld des Fahrzeugs oder einen Bewegungszustand des Fahrzeugs zu erfassen. Somit kann die Sensorik beispielsweise einen Umfeldsensor oder einen Sensor zur Geschwindigkeitserfassung umfassen. Durch das Überwachen und/oder Detektieren der Sensorik kann beispielsweise eine Funktionsfähigkeit oder ein Kalibrierzustand der Sensorik überwacht werden. Ferner kann das Vorhandensein zumindest eines Sensors der Sensorik überwacht und somit detektiert werden.

Unter einer Antwortreaktion kann beispielsweise eine Zustandsänderung oder Aktion des Fahrzeugs oder einer Einrichtung des Fahrzeugs verstanden werden. Die Antwortreaktion kann somit eine Reaktion der Sensorik oder eine basierend auf Sensordaten der Sensorik basierende Reaktion des Fahrzeugs oder einer Einrichtung des Fahrzeugs sein. Die Sensorik kann dermaßen in die Antwortreaktion einbezogen sein, dass die Antwortreaktion eine Folge eines Sensorsignals ist, das von der Sensorik ansprechend auf das Anregungsereignis bereitgestellt wird. Das Anregungsereignis kann so gewählt sein, dass es eine voraussehbare Antwortreaktion hervorruft. Das Anregungsereignis kann unter Verwendung der Sensorik erkannt werden. Das Anregungsereignis kann für einen Insassen des Fahrzeugs und/oder die Sensorik des Fahrzeugs sichtbar oder unsichtbar realisiert sein. Das Fahrzeug oder die Sensorik kann eine Steuereinrichtung umfassen, die ausgebildet ist, um ansprechend auf das Erkennen des Anregungsereignisses zumindest ein Steuersignal bereitzustellen, dass die Antwortreaktion hervorruft. Die Antwortreaktion kann beispielsweise von einer extern zu dem Fahrzeug angeordneten Vorrichtung erkannt werden, indem die Vorrichtung das Antwortsignal auswertet, das eine von dem Fahrzeug während oder nach der Antwortreaktion ausgehende Strahlung repräsentiert. Durch den Parameter kann die Antwortreaktion charakterisiert werden. Der Parameter kann sich beispielsweise auf eine Zustandsänderung des Fahrzeugs oder einer Einrichtung oder der Sensorik des Fahrzeugs beziehen. Beispielsweise kann sich der Parameter auf eine Geschwindigkeit oder Geschwindigkeitsänderung, Richtung oder Richtungsänderung des Fahrzeugs oder auf eine Charakteristik oder Änderung einer Charakteristik einer von dem Fahrzeug ausgesendeten Strahlung beziehen (z.B. kurzes Aufleuchten des Bremslichts, Veränderungen bezüglich des Fahrlichts, akustische Rückmeldungen). Über das Antwortsignal kann als Parameterwert beispielsweise eine Größe einer Geschwindigkeitsänderung des Fahrzeugs, eine Geschwindigkeit oder ein Maß einer Änderung einer Lichtaussendung des Fahrzeugs oder eine Charakteristik einer Änderung von Sensorsignalen erkannt werden, die von der Sensorik ausgesendet werden. Gemäß einer Ausführungsform kann bei einer voll funktionsfähigen Sensorik angenommen werden, dass auf das Anregungsereignis eine vorbestimmte Antwortreaktion folgt, die durch den vorbestimmten Reaktionswert charakterisiert werden kann. Der vorbestimmte Reaktionswert kann als Referenz für den Parameterwert abgespeichert sein. Somit kann durch einen Vergleich des Parameterwerts mit den vorbestimmten Reaktionswert darauf geschlossen werden, ob die Sensorik voll funktionsfähig ist, bzw. innerhalb eines definierten Betriebstoleranzbereichs arbeitet. Das Überwachungssignal kann somit durch eine geeignete Kombination des Parameterwerts und des vorbestimmten Reaktionswerts bestimmt werden. Das Überwachungssignal kann beispielsweise einen Zustand der Sensorik anzeigen oder auch genutzt werden, um die Sensorik zu beeinflussen, beispielsweise zu kalibrieren.

Das Verfahren und eine entsprechende Vorrichtung können somit beispielsweise zur Kalibrierung von (teil-)autonomen Fahrzeugen eingesetzt werden. Dabei kann das Verfahren im Zusammenhang mit autonomen Fahrzeugen oder Flugzeugen eingesetzt werden, die die eigene Sensorik autark überwachen. Vorteilhafterweise bietet der beschriebene Ansatz eine externe, unabhängige Überwachung der Sensorik. Dies ist vorteilhaft, da beim autonomen oder teilautonomen Fahren die Haftungsfrage bei Kollisionen entscheidend ist. Es gibt hier für den automatisierten Fahrmodus eine Haftung der Automobilhersteller und für den manuellen Betrieb eine Fahrerhaftung. Durch den beschriebenen Ansatz können die Sensorik betreffende Informationen unabhängig von durch das Fahrzeug selbst, beispielsweise unter Verwendung eines Fahrtenschreibers, erfasste Daten bestimmt werden. Vorteilhafterweise kann dabei eine Überwachung und Kalibrierung von außerhalb und unabhängig vom Fahrzeug erfolgen.

Es kann somit eine unabhängige und geeichte "Instanz" als Kalibrierungs-Anreger realisiert werden. Eine Protokollierung der von dem Fahrzeug ausgehenden Sensor-Antworten im Falle eines Unfalls bzw. für eine technische Prüforganisation ist möglich. Insbesondere ist eine autarke Lösung realisierbar. Dabei ist auch eine Verbindung mit einer Backoffice-Lösung zur Ahndung von Verkehrsdelikten oder für Servicezwecke möglich. Vorteilhafterweise kann eine In-Situ Überwachung realisiert werden. Dabei ist keine Schnittstelle zum Fahrzeug notwendig. Somit können die ermittelten Informationen auch ohne Schnittstelle zum Fahrzeug Verwendung finden. Es ist somit eine von einem Fahrzeughersteller des Fahrzeugs unabhängige Prüfung und zusätzlich oder alternativ Kalibrierung der Sensorik des Fahrzeugs möglich. Insbesondere ist eine Bereitstellung einer unabhängigen "dritten" Instanz zur Kalibrierung bzw. Kalibrierungsanregung von autonomen oder teilautonomen Fahrzeugen möglich. Dabei kann einem Fahrzeug auch ein Flugzeug, eine Drohne, ein Schiff oder ein Schienenfahrzeug verstanden werden.

Der beschriebene Ansatz kann zusätzlich oder alternativ zu einer Kalibrierung der Sensorik mittels einer Kalibriervorrichtung im Fahrzeug, einer Selbst-Kalibrierung durch Erzeugen einer Sensor-Reflexion an speziellen Testgeometrien am Straßenrand oder einer Kalibrierung in der Werkstatt erfolgen. Eine solche Kalibrierung kann beispielsweise eine assistierte Fernlichtsteuerung oder das adaptive Kurvenlicht betreffen.

Gemäß einer Ausführungsform des beschriebenen Ansatzes kann somit im Schritt des Bestimmens das Überwachungssignal ein Kalibrierwert zum Kalibrieren der Sensorik umfassen. Ein den Kalibrierwert umfassendes Kalibriersignal kann beispielsweise an eine Schnittstelle zu der Sensorik ausgegeben werden. Alternativ kann der Kalibrierwert für eine spätere Kalibrierung der Sensorik abgespeichert werde. Zusätzlich oder alternativ kann das Überwachungssignal so bestimmt werden, dass es einen Zustand der Sensorik anzeigt. Ein solches Überwachungssignal kann beispielsweise anzeigen, dass die Sensorik voll funktionsfähig, eingeschränkt funktionstüchtig oder fehlerbehaftet ist. Beispielsweise kann das Überwachungssignal eine Verschmutzung eines Sensors der Sensorik oder eine fehlerhafte Positionierung oder Ausrichtung eines Sensors der Sensorik anzeigen. Ferner kann das Überwachungssignal ein Vorhandensein der Sensorik anzeigen. Auf diese Weise kann beispielsweise angezeigt werden, ob ein Fahrzeug mit einer zum zumindest teilautonomen Fahren geeigneten Sensorik ausgerüstet ist. Beispielsweise kann eine von dem Überwachungssignal umfasste Information auf einem Bildschirm des Fahrzeugs angezeigt werden oder zur Aktualisierung von dem Fahrzeug zugeordneten Daten einer Verkehrsleitstelle verwendet werden.

Das Verfahren kann einen Schritt des Aussendens umfassen, in dem zumindest ein das Anregungsereignis bewirkendes Signal unter Verwendung des Anregungssignals ausgesendet wird. Bei einem solchen Signal kann es sich um ein akustisches und/oder ein elektromagnetisches Signal handeln. Zum Aussenden eines solchen Signals kann eine geeignete Sendeeinrichtung, beispielsweise eine Lichtquelle verwendet werden. Auf diese Weise kann das Anregungsereignis sehr schnell und einfach hervorgerufen werden. Beispielsweise kann im Schritt des Aussendens als das elektromagnetische Signal ein Lichtimpuls in Richtung des Fahrzeugs ausgesendet werden. Ein solcher Lichtimpuls kann beispielsweise ein entgegenkommendes Fahrzeug simulieren, sodass die Antwortreaktion eine Reaktion einer adaptiven Fahrzeugbeleuchtung des Fahrzeugs sein kann. Auch kann als das elektromagnetische Signal ein im Vorfeld des Fahrzeugs erscheinender Lichtvorhang oder Strahlungswellenvorhang ausgesendet werden. Dazu kann beispielsweise ein Laser unter Verwendung des Anregungssignals geeignet angesteuert werden. Auf diese Weise kann ein sich im Vorfeld des Fahrzeugs befindliches Hindernis simuliert werden, sodass die Antwortreaktion ein Bremsmanöver oder ein Lenkmanöver des Fahrzeugs sein kann.

Das Verfahren kann einen Schritt des Ausführens einer das Anregungsereignis bewirkenden Zustandsänderung eines sich im Umfeld des Fahrzeugs befindlichen Objekts umfassen. Dadurch kann die Zustandsänderung des Objekts unter Verwendung des Anregungssignals bewirkt werden. Die Zustandsänderung des Objekts kann sich beispielsweise auf einen Bewegungszustand oder ein äußeres Aussehen des Objekts beziehen. Dabei kann die Zustandsänderung so gewählt werden, dass es absehbar ist, dass durch die Zustandsänderung die Antwortreaktion des Fahrzeugs hervorgerufen wird. Beispielsweise kann im Schritt des Ausführens ein Bremsvorgang und/oder ein anderes Anregungsereignis eines sich im Umfeld des Fahrzeugs befindlichen Überwachungsfahrzeugs als die Zustandsänderung ausgeführt werden. Vorteilhafterweise ist ein solches Überwachungsfahrzeug nicht ortsgebunden sondern kann sich im Verkehr mitbewegen. Somit können auch gezielt Fahrzeuge ausgewählt werden, deren Sensorik überwacht werden soll. Das Überwachungsfahrzeug kann sich dabei beispielsweise im Vorfeld des Fahrzeugs oder hinter dem Fahrzeug befinden. Befindet sich das Überwachungsfahrzeug hinter dem Fahrzeug, können beispielsweise die Rückleuchten oder das Bremsen des Fahrzeugs mittels Erkennung des Bremslichts oder eine Situation eines zu dichten Auffahrens betrachtet werden.

Gemäß einer Ausführungsform kann im Schritt des Ermittelns der Parameterwert als eine Geschwindigkeitsänderung, beispielsweise eine Verzögerung oder Beschleunigung, des Fahrzeugs ermittelt werden. Auf diese Weise kann beispielsweise eine Umfeldsensorik des Fahrzeugs überwacht werden, die anspricht, wenn als Anregungsereignis ein simuliertes Hindernis im Vorfeld des Fahrzeugs gewählt wird. Zusätzlich oder alternativ kann der Parameterwert als eine Charakteristik einer Nachführung einer adaptiven Fahrzeugbeleuchtung des Fahrzeugs ermittelt werden. Eine solche Charakteristik kann sich beispielsweise auf eine Reaktionszeit der adaptiven Fahrzeugbeleuchtung oder auf eine Intensität des von der Fahrzeugbeleuchtung ausgesendeten Lichts beziehen. Auf diese Weise kann beispielsweise eine Sensorik des Fahrzeugs überwacht werden, die anspricht, wenn ein entgegenkommendes Fahrzeug von einem Lichtkegel der Fahrzeugbeleuchtung des Fahrzeugs erfasst wird.

Zumindest die genannten Schritte des Bereitstellens, Ermittelns und Bestimmens des Verfahrens können unter Verwendung einer Vorrichtung ausgeführt werden, die beispielsweise in dem Fahrzeug selbst, in einer Infrastrukturanlage, insbesondere einer Anlage zur Verkehrsüberwachung, oder in einem Überwachungsfahrzeug angeordnet sein kann. Wenn die Vorrichtung in einer Infrastrukturanlage oder einem Überwachungsfahrzeug angeordnet ist, so kann die Überwachung der Sensorik des Fahrzeugs durch eine von dem Fahrzeug unabhängige Instanz durchgeführt werden.

Das Verfahren kann einen Schritt des Erfassens des Antwortsignals umfassen. Dabei kann die durch das Antwortsignal repräsentierte und von dem Fahrzeug ausgehende Strahlung eine von dem Fahrzeug ausgesendete und/oder reflektierte Strahlung repräsentieren. Bei der ausgesendeten Strahlung kann es sich beispielsweise um eine von einer Umfelderfassungssensorik des Fahrzeugs zur Umfelderfassung ausgesendete elektromagnetische oder akustische Strahlung handeln. Auch kann es sich bei der ausgesendeten Strahlung um Licht handeln, das von einer Fahrzeugbeleuchtung des Fahrzeugs ausgesendet wird. Bei der reflektierten Strahlung kann es sich beispielsweise um reflektiertes Umgebungslicht oder um ein von einer Sensoreinrichtung einer Vorrichtung zur Durchführung des Verfahrens ausgesendeten reflektierten Sensorstrahlung handeln. Durch das Erfassen einer solchen Strahlung als Antwortsignal kann beispielsweise eine Geschwindigkeitsänderung oder eine Änderung des von einer Fahrzeugbeleuchtung des Fahrzeugs ausgesendeten Lichts erfasst werden.

Das Verfahren kann einen Schritt des Erkennens eines Typs des Fahrzeugs umfassen. Der Typ des Fahrzeugs kann in einem Schritt des Auswählens verwendet werden, um den Reaktionswert auszuwählen. Dies ist vorteilhaft, da ein Anregungsereignis bei unterschiedlichen Fahrzeugtypen unterschiedliche Antwortreaktionen hervorrufen kann. Solche unterschiedlichen Antwortreaktionen können durch unterschiedliche Reaktionswerte charakterisiert sein.

Das Antwortsignal kann ausgesendete Sensorsignale der Sensorik und der Parameterwert eine Intensitätsverteilung der ausgesendeten Sensorsignale repräsentieren. Auf diese Weise kann der Parameterwert eine Messlandkarte darstellen.

In diesem Fall kann im Schritt des Bestimmens unter Verwendung des Parameterwerts und des vorbestimmten Reaktionswerts ein Vorhandensein oder Nichtvorhandensein eines für ein zumindest teilautonomes Fahren erforderlichen Sensors der Sensorik bestimmt werden. Das Überwachungssignal kann abhängig von dem Vorhandensein oder Nichtvorhandensein des erforderlichen Sensors einen Grad an autonomen Fahren des Fahrzeugs anzeigen. Auf diese Weise kann beispielsweise festgestellt werden, dass ein an sich zum autonomen Fahren fähiges Fahrzeug manuell gesteuert wird, beispielsweise weil ein zum autonomen Fahren erforderlicher Sensor der Sensorik ausgefallen ist.

Eine Vorrichtung zum Überwachen einer Sensorik eines Fahrzeugs weist die folgenden Merkmale auf:
Optional eine Bereitstellungseinrichtung, die ausgebildet ist, um ein Anregungssignal zum Bewirken eines Anregungsereignisses bereitzustellen, das eine die Sensorik des Fahrzeugs einbeziehende Antwortreaktion des Fahrzeugs hervorruft;
eine Ermittlungseinrichtung, die ausgebildet ist, um einen Parameterwert zu ermitteln, der beispielsweise einen erfassten Wert eines Parameters der Antwortreaktion repräsentiert, unter Verwendung eines Antwortsignals, das beispielsweise eine von dem Fahrzeug ausgehende Strahlung repräsentiert; und
eine Bestimmungseinrichtung, die ausgebildet ist, um ein der Sensorik zuordenbares Überwachungssignal unter Verwendung des Parameterwerts und eines vorbestimmten Reaktionswerts zu bestimmen.

Somit können die im Zusammenhang mit dem genannten Verfahren beschriebenen Schritte vorteilhaft unter Verwendung geeigneter Einrichtungen einer Vorrichtung zum überwachen der Sensorik eines Fahrzeugs umgesetzt werden. Gemäß unterschiedlicher Ausführungsformen kann die Vorrichtung vollständig innerhalb des Fahrzeugs angeordnet werden oder vollständig extern zu dem Fahrzeug angeordnet werden. Dies ermöglicht die Realisierung einer Infrastrukturanlage, eines Fahrzeugs, beispielsweise eines Straßen-, Land- oder Luftfahrzeugs, oder eines Überwachungsfahrzeugs, die jeweils eine entsprechende Vorrichtung umfassen können oder mit einer solchen Vorrichtung gekoppelt sind. Unter einer Infrastrukturanlage kann beispielsweise ein Gerät zur Verkehrsüberwachung, beispielweise zur Geschwindigkeitsmessung oder Abstandsmessung, eine Lichtzeichenanlage oder ein Verkehrsleitsystem verstanden werden. Unter einem Überwachungsfahrzeug kann beispielweise ein Straßenfahrzeug oder ein Luftfahrzeug, wie beispielsweise eine Drohne, oder ein Wasserfahrzeug verstanden werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird anhand der beigefügten Zeichnungen beispielhaft näher erläutert. Es zeigen:
Figur 1 eine schematische Darstellung eines Anregungsereignisses zum Überwachen einer Sensorik eines Fahrzeugs gemäß einem Ausführungsbeispiel;
Figur 2 eine schematische Darstellung eines Anregungsereignisses zum Überwachen einer Sensorik eines Fahrzeugs gemäß einem Ausführungsbeispiel;
Figur 3 eine schematische Darstellung einer Vorrichtung zum Überwachen einer Sensorik eines Fahrzeugs gemäß einem Ausführungsbeispiel; und
Figur 4 ein Ablaufdiagramm eines Verfahrens zum Überwachen einer Sensorik eines Fahrzeugs gemäß einem Ausführungsbeispiel.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

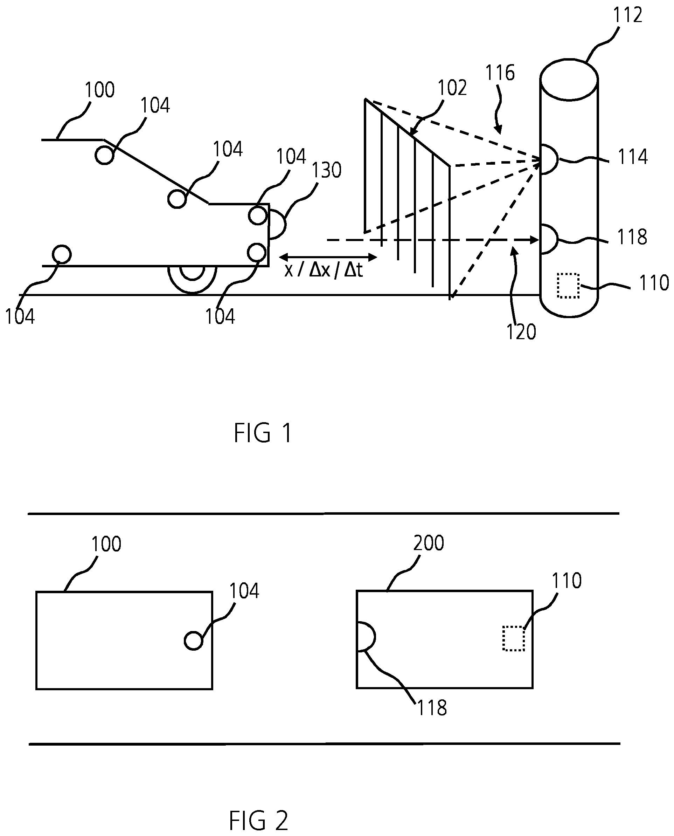

Figur 1 zeigt eine schematische Darstellung eines Fahrzeugs 100 während eines Anregungsereignisses 102 gemäß einem Ausführungsbeispiel. Bei dem Fahrzeug 100 handelt sich beispielhaft um ein Straßenfahrzeug, das auf einer Straße fährt. Das Anregungsereignis 102 stellt gemäß diesem Ausführungsbeispiel einen Lichtvorhang dar, der ein sich im Vorfeld des Fahrzeugs 100 befindliches Hindernis darstellt. Das Fahrzeug 100 weist eine Sensorik 104 auf, die zumindest einen Sensor, gemäß diesem Ausführungsbeispiel eine Mehrzahl von Sensoren umfasst. Zumindest ein Sensor der Sensorik 104 ist gemäß diesem Ausführungsbeispiel als ein Umfeldsensor, beispielweise als eine Kamera ausgeführt, und ausgebildet, um den Lichtvorhang zu erkennen und als Hindernis zu interpretieren. Weitere Sensoren der Sensorik 104 umfassen beispielsweise einen Ultraschallsensor oder einen Radarsensor, eine Photodiode oder einen Sensor zur Geschwindigkeitsmessung.

Gemäß einem Ausführungsbeispiel weist das Fahrzeug 100 eine Steuereinrichtung auf, die ausgebildet ist, um ansprechend auf das Erkennen des durch das Anregungsereignis 102 simulierten Hindernisses eine Antwortreaktion zu veranlassen. Die Steuereinrichtung kann als separates Steuergerät ausgeführt sein oder in die Sensorik 104 integriert sein. Gemäß diesem Ausführungsbeispiel besteht die Antwortreaktion darin, dass das Fahrzeug 100 abbremst. Das Anregungsereignis 102 ist so gewählt, dass die Antwortreaktion des Fahrzeugs 100 vorhersehbar und somit mit einer erwarteten Antwortreaktion verglichen werden kann. Dazu können beispielsweise die tatsächliche und die erwartete Antwortreaktion charakterisierende Parameter, beispielsweise physikalische Größen, miteinander verglichen werden.

Gemäß diesem Ausführungsbeispiel wird das Bewirken des Anregungsereignisses 102 durch eine Vorrichtung 110 gesteuert. Gemäß diesem Ausführungsbeispiel ist die Vorrichtung 110 in eine Infrastrukturanlage 112, hier eine Infrastrukturanlage zur Verkehrsüberwachung, beispielsweise einen so genannten "TraffiTower", integriert. Die Infrastrukturanlage 112 weist eine Sendeeinrichtung 114 auf, die ausgebildet ist, um ansprechend auf ein von der Vorrichtung 110 bereitgestelltes Anregungssignal ein das Anregungsereignis 102 bewirkendes Signal 116 auszusenden. Gemäß diesem Ausführungsbeispiel ist die Sendeeinrichtung 114 als ein Laser ausgeführt, der ausgebildet ist, um das Signal 116 in Form von Laserstrahlen auszusenden, die den Lichtvorhang im Vorfeld des Fahrzeugs 100 ausformen. Zusätzlich oder alternativ kann die Sendeeinrichtung 114 beispielsweise Ultraschallstrahlen, Radarstrahlen oder Funkwellen aussenden, die von der Sensorik 104 des Fahrzeugs 104 erfasst und somit als Anregungsereignis 102 dienen können.

Die Infrastrukturanlage 112 weist ferner eine Empfangseinrichtung 118 auf, die ausgebildet ist, um von dem Fahrzeug 100 ausgehende Strahlung 120 zu empfangen und ein die Strahlung 120 repräsentierendes Antwortsignal an die Vorrichtung 110 bereitzustellen. Bei der Strahlung 120 handelt es sich gemäß unterschiedlicher Ausführungsbeispiele um von dem Fahrzeug 100 ausgesendeten oder reflektierte elektromagnetische oder akustische Strahlung. Gemäß diesem Ausführungsbeispiel ist die Strahlung 120, die von der Empfangseinrichtung 118 empfangen wird, geeignet um eine Geschwindigkeitsänderung des Fahrzeugs 100 zu erfassen.

Gemäß diesem Ausführungsbeispiel ist die Vorrichtung 110 ausgebildet, um unter Verwendung des von der Empfangseinrichtung 118 bereitgestellten Antwortsignals eine Größe einer Geschwindigkeitsänderung des Fahrzeugs 100 zu bestimmen. Die Geschwindigkeitsänderung stellt einen Parameter der Antwortreaktion des Fahrzeugs 100 auf das Anregungsereignis 102 dar. Die Größe der Geschwindigkeitsänderung stellt einen Parameterwert des Parameters dar. Da das Anregungsereignis 102 von der Vorrichtung 110 veranlasst wurde, ist die Antwortreaktion des Fahrzeugs 100 zu erwarten. Die zu erwartende Antwortreaktion des Fahrzeugs 100 kann dabei durch einen vorbestimmten Reaktionswert charakterisiert sein, der in der Vorrichtung 110 gespeichert sein kann oder von der Vorrichtung 110 eingelesen werden kann. Um zu bestimmen, ob die tatsächliche Antwortreaktion des Fahrzeugs 100 mit der erwarteten Antwortreaktion übereinstimmt, ist die Vorrichtung 110 gemäß einem Ausführungsbeispiel ausgebildet, um den Parameterwert, hier die Größe der Geschwindigkeitsänderung des Fahrzeugs 100, mit dem vorbestimmten Reaktionswert zu vergleichen. Besteht eine Abweichung zwischen den Parameterwert und dem vorbestimmten Reaktionswert, so wird dies gemäß einem Ausführungsbeispiel als Hinweis angesehen, dass das Anregungsereignis von der Sensorik 104 des Fahrzeugs 100 nicht korrekt erkannt wurde. Entsprechen Parameterwert und vorbestimmter Reaktionswert einander, so wird gemäß einem Ausführungsbeispiel davon ausgegangen, dass die Sensorik 104 des Fahrzeugs 100 voll funktionsfähig ist.

Gemäß einem Ausführungsbeispiel ist die Vorrichtung 110 ausgebildet, um unter Verwendung des Parameterwerts und des vorbestimmten Reaktionswerts ein Überwachungssignal bereitzustellen, das ausgebildet ist, um den Zustand der Sensorik 104 anzuzeigen oder das einen Kalibrierwert umfasst, der geeignet ist, um die Sensorik 104 zu kalibrieren. Das Überwachungssignal wird beispielsweise über eine Funkschnittstelle der Vorrichtung 110 oder der Infrastruktureinrichtung 112 an das Fahrzeug 100 übermittelt, so dass beispielsweise der Kalibrierwert, während der Vorbeifahrt des Fahrzeugs 100 an der Infrastruktureinrichtung 112, zum Kalibrieren der Sensorik 104 verwendet werden kann.

Gemäß einem Ausführungsbeispiel weist das Fahrzeug 100 eine adaptive Beleuchtung 130 auf. Die adaptive Beleuchtung 130 ist ausgebildet, um eine Blendung eines entgegenkommenden Fahrzeugs zu vermeiden. Dazu ist die adaptive Beleuchtung 130 ausgebildet, um eine Charakteristik einer Lichtaussendung der adaptiven Beleuchtung 130 zu verändern. Dazu ist die adaptive Beleuchtung 130 beispielsweise ausgebildet, um eine Intensität oder eine Lichtverteilung der Lichtaussendung anzupassen. Um ein entgegenkommendes Fahrzeug zu erkennen, das gegebenenfalls geblendet werden könnte, nutzt das Fahrzeug 100 gemäß einem Ausführungsbeispiel die Sensorik 104. Gemäß einem Ausführungsbeispiel wird die Vorrichtung 110 zusätzlich oder alternativ verwendet, um die Sensorik 104 dahingehend zu überwachen, ob ein entgegenkommendes Fahrzeug erkannt wird. Dazu ist die Vorrichtung 110 ausgebildet, um die Sendeeinrichtung 114, oder eine weitere Sendeeinrichtung so anzusteuern, dass als das Signal 116 in Form eines Lichtimpulses ausgesendet wird, der aus Sicht des Fahrzeugs 100 ein entgegenkommendes Fahrzeug simuliert. Wenn die Sensorik 104 voll funktionsfähig ist, wird der Lichtimpuls von der Sensorik 104 als ein Anregungsereignis 102 angesehen, dass als entgegenkommendes Fahrzeug gewertet wird. In diesem Fall wird ein von der Sensorik 104 bereitgestelltes Signal dazu verwendet, um die Charakteristik der Lichtaussendung der adaptiven Beleuchtung 130 geeignet zu verändern. Die Änderung der Charakteristik der Lichtaussendung kann somit als Antwortreaktion auf das Anregungsereignis 102 angesehen werden. Die Empfangseinrichtung 118 oder eine weitere Empfangseinrichtung ist ausgebildet, um von der adaptiven Beleuchtung 130 ausgesendetes Licht als die Strahlung 120 zu empfangen und die Strahlung 120 repräsentierendes Antwortsignal an die Vorrichtung 110 bereitzustellen. Die Vorrichtung 110 ausgebildet, um unter Verwendung des Antwortsignals einen die Änderung der Charakteristik der Lichtaussendung repräsentierenden Parameterwert zu ermitteln und mit einem vorbestimmten Reaktionswert zu vergleichen. Auf diese Weise ist die Vorrichtung 110 ausgebildet, um zumindest den Teil der Sensorik 104, der zum Erkennen eines entgegenkommenden Fahrzeugs verwendet wird, zu überprüfen.

Gemäß unterschiedlicher Ausführungsbeispiele können die Sendeeinrichtung 114 und/oder die Empfangseinrichtung 118 auch als Teil der Vorrichtung 110 angesehen werden oder die Vorrichtung kann in die Sendeeinrichtung 114 und/oder die Empfangseinrichtung 118 integriert sein. Die Sendeeinrichtung 114 und die Empfangseinrichtung 118 können auch als eine Einheit ausgeführt sein. Zur Ermittlung der Antwortreaktion des Fahrzeugs 100 kann die Empfangseinrichtung 118 auch als Sende-Empfangseinrichtung ausgeführt und ausgebildet sein, um ein Messsignal auszusenden und ein von dem Fahrzeug 100 reflektiertes Signal als die Strahlung 120 zu empfangen. Dies ermöglicht beispielsweise eine exakte Erfassung der Geschwindigkeit des Fahrzeugs 100.

Gemäß einem Ausführungsbeispiel wird das hier beschriebene Verfahren und die Vorrichtung 110 zur Kalibrierung bzw. Anregung zur Kalibrierung von unterschiedlichen Sensoren der Sensorik 104 des beispielsweise autonomen Fahrzeugs 100 von außen verwendet. Gemäß einem alternativen Ausführungsbeispiel ist die Vorrichtung 110 als eine Box in dem Fahrzeug 100 angeordnet. Die Vorrichtung 110 kann beliebig ausgeführt sein und wird gemäß diesem Ausführungsbeispiel als Ausgestaltung der im folgenden auch als "TraffiTower" bezeichneten Infrastrukturanlage 112 genannt. Die Infrastrukturanlage 112 kümmert sich um die Prozesssicherheit des autonomen Fahrens und kalibriert bzw. regt an zur Kalibrierung der Sensoren von vorbeifahrenden Autos, wie beispielsweise der Sensorik 104 des Fahrzeugs 100.

Der beschriebene Ansatz kann in-situ ausgeführt werden. Die Vorrichtung 110 oder gemäß diesem Ausführungsbeispiel die die Vorrichtung 110 umfassende Infrastrukturanlage 112 regt zu definierten Antworten an. Die Infrastrukturanlage 112 simuliert gemäß einem Ausführungsbeispiel als Anregungsereignis 102 eine In-Situ-Blockade, beispielsweise ein Hindernis, z.B. mittels Laservorhang und misst Antworten und/oder Verzögerungen der Fahrzeuge, hier des Fahrzeugs 100. Die Infrastrukturanlage 112 zeichnet gemäß einem Ausführungsbeispiel eine "Messlandkarte" mit Intensitätsverteilung der ausgesendeten Sensorsignale der Sensorik 104, z.B. Radar, IR, WLAN - alles was aus dem Fahrzeug 100 strahlt - als Beispiel für die Strahlung 120 auf und wertet diese aus. Eine Auswertung der Strahlung 120 kann insbesondere vom Fahrzeugtyp abhängig erfolgen. Es wird gemäß einem Ausführungsbeispiel zusätzlich festgestellt, welcher Grad an autonomem Fahren vorliegt, beispielsweise voll-autonom, teil-autonom und manuell ohne Sensoren im Falle eines älteren Fahrzeugs 100. Die Infrastrukturanlage 112 ist gemäß einem Ausführungsbeispiel ausgebildet, eine Verschiebung der Sensoren der Sensorik 104 zu messen. Dazu wird gemäß einem Ausführungsbeispiel die von der Empfangseinrichtung 118 empfange Strahlung 120 ausgewertet. Eine entsprechende Verschiebung der Sensoren ergibt sich z.B. durch Blechschaden in Bereichen zwischen den Sensoren. Durch das Überwachen der Sensorik 104 kann eine solche Verschiebung erkannt werden. Die Verschiebung kann beispielsweise dadurch erkannt werden, dass eine Charakteristik der Strahlung 120 nicht mit einer erwarteten Charakteristik übereinstimmt. Das Erkennen der Verschiebung ist vorteilhaft, da die Verschiebung sofort erkannt werden kann und nicht bis zur nächsten Hauptuntersuchung des Fahrzeugs 100 gewartet werden muss. Die Infrastrukturanlage 112 protokolliert Auffälligkeiten und/oder Verschmutzungen von Sensoren der Sensorik 104. Gemäß einem Ausführungsbeispiel ist die Vorrichtung 110 ausgebildet, um entsprechende Auffälligkeiten und/oder Verschmutzungen durch Auswerten des von der Empfangseinrichtung 118 bereitgestellten Antwortsignals zu erkennen und unter Verwendung des Überwachungssignals anzuzeigen.

Gemäß dem gezeigten Ausführungsbeispiel ist die Infrastrukturanlage 102 als ein fest installiertes, stationäres Objekt ausgeführt. Gemäß einem alternativen Ausführungsbeispiel ist die Infrastrukturanlage 102, selbst ein autonomes Fahrzeug oder eine Drohne. Dadurch kann die Infrastrukturanlage 102 beispielsweise gezielte Testbremsungen im Millisekundenbereich machen oder simulieren und dabei Abstände und Geschwindigkeiten protokollieren/diagnostizieren und basierend auf diesen Daten die Fahrzeuge 100 aus der Umgebung in-situ kalibrieren, usw.

Insbesondere ist ein Datenaustausch durch eine oder mehrere Schnittstellen zur Kalibrierung der Fahrzeugsensoren zu den Fahrzeugen möglich, es kann also eine Schnittstelle vorgesehen, um das von der Vorrichtung 110 bereitgestellte Überwachungssignal oder von dem Überwachungssignal umfasste Daten an das Fahrzeug 100 auszusenden, um die Sensorik 104 unter Verwendung des Überwachungssignals oder entsprechenden Daten zu kalibrieren.

Eine Ausführungsform an Kalibrier-Anregungen stellt die Überwachung und Nachführung der adaptiven Fahrzeugbeleuchtung 130 dar. Dies betrifft vorwiegend die korrekte Funktion eines Fernlichtassistenten zur Vermeidung des Blendens von Fahrern vorausfahrender und insbesondere entgegenkommender Fahrzeuge. Diese Methode ist auch auf Kurvenfahrlicht oder vergleichbaren Beleuchtungen anwendbar.

Eine besondere Ausführungsform der durch das Anregungsereignis 102 bewirkten Kalibrieranregung kann z.B. durch (Funk-)Wellen, akustisch, optisch insbesondere durch Lichtimpulse oder Lichtvorhang erfolgen.

Vorteilhafterweise ist eine Kombination der Vorrichtung mit bekannter Verkehrsüberwachungs-Messtechnik (z.B. Geschwindigkeitsüberwachung, Rotlichtüberwachung, Mautüberwachung - alle Verfahren inkl. automatischem Kennzeichenlesen (ANPR) inkl. Videoaufnahmen mit Gesichtserkennung der Insassen), wie sie beispielsweise in der Infrastrukturanlage 102 bereits vorhanden ist, möglich.

Anhand von Figur 1 wird der beschriebene Ansatz anhand eines Ausführungsbeispiels näher beschrieben. Dabei ist die Vorrichtung 110, die ein entsprechendes Verfahren ausführt, mit einer Infrastrukturanlage 102 kombiniert, hier in Form des "TraffiTower" mit unterschiedlichen Sensoren, hier beispielhaft einer Sendeeinrichtung 114 in Form eines Lasers zur Aussendung von Signalen 116 in Form von Laserstrahlung zur Erzeugung eines "unsichtbaren" Laservorhangs als Anregungsereignis 102, welcher eine Blockade für Bruchteile von Sekunden erzeugt. Das Fahrzeug 100 ist mit der Sensorik 104 mit Sensoren unterschiedlichster Art ausgestattet. Die Empfangseinrichtung 118, beispielsweise in Form eines Sensors in der als Tower ausgeführten Infrastrukturanlage 102 misst Strecken/Abstände x und Verzögerungen bzw. Änderungen Δx / Δt als Antwort auf Sensorreaktionen der Sensorik 104, hervorgerufen durch das Anregungsereignis 102 in Form des Laservorhangs.

Gemäß einem Ausführungsbeispiel wird das Anregungsereignis 102 nicht aktiv hervorgerufen sondern wird beispielsweise durch das Auftreten einer Kurve im Verlauf der Straße oder ein Verkehrsschild oder ein anderes Infrastrukturobjekt bewirkt. Auch ein solches Anregungsereignis führt zu einer voraussehbaren Antwortreaktion, die unter Verwendung des Antwortsignals 120 analysiert werden kann.

Gemäß einem Ausführungsbeispiel wird das Antwortsignal 120 zusätzlich oder alternativ von einer Infrastrukturanlage, beispielsweise einer in die Fahrbahn eingelassene Schleife, zum Erfassen des Fahrzeugs 100 oder eines Zustands des Fahrzeugs 100, bereitgestellt.

Gemäß einem Ausführungsbeispiel handelt es sich bei dem Antwortsignal 120 um ausgesendete Sensorsignale der Sensorik 104 und der Parameterwert repräsentiert eine Intensitätsverteilung der ausgesendeten Sensorsignale. Der vorbestimmte Reaktionswert stellt dabei eine erwartetet Intensitätsverteilung da, die beispielsweise speziell für den Typ des Fahrzeugs 100 oder der Sensorik 104 abgespeichert ist. Auf diese Weise kann durch eine Auswertung der Intensitätsverteilung auf das Vorhandensein oder Nichtvorhandensein eines für ein zumindest teilautonomes Fahren des Fahrzeugs 100 erforderlichen Sensors der Sensorik 104 geschlossen werden. Dazu kann insbesondere eine Abweichung der tatsächlichen Intensitätsverteilung von der erwarteten Intensitätsverteilung ausgewertet werden. Vorteilhafterweise kann unter Kenntnis des Vorhandenseins oder Nichtvorhandenseins des für ein zumindest teilautonomes Fahren des Fahrzeugs 100 erforderlichen Sensors oder direkt aus der Intensitätsverteilung oder direkt aus einem Vergleich der Intensitätsverteilung mit der erwarteten Intensitätsverteilung auf einen Grad an autonomen Fahren des Fahrzeugs 100 geschlossen und unter Verwendung des Überwachungssignals angezeigt werden.

Figur 2 zeigt eine schematische Darstellung eines Anregungsereignisses zum Überwachen einer Sensorik eines Fahrzeugs 100 gemäß einem Ausführungsbeispiel. Gemäß diesem Ausführungsbeispiel ist die Vorrichtung 110 zur Überwachung der Sensorik 104 des Fahrzeugs 100 in einem Überwachungsfahrzeug 200 angeordnet. Das Fahrzeug 100 und das Überwachungsfahrzeug 200 fahren auf einer Straße, wobei das Überwachungsfahrzeug 200 vor dem Fahrzeug 100 fährt. Das Überwachungsfahrzeug 200 ist ausgebildet, um als Anregungsereignis einen Bremsvorgang durchzuführen oder zu simulieren, beispielsweise durch Aktivierung der Bremslichter. Die Sensorik 104 des Fahrzeugs 100 ist ausgebildet, um den Bremsvorgang zu erkennen. Ein von der Sensorik 104 bereitgestellte Sensorsignal wird von dem Fahrzeug 100 verwendet, um als Antwortreaktion auf den Bremsvorgang beispielsweise ebenfalls einen Bremsvorgang durchzuführen oder ein Ausweichmanöver einzuleiten. Das Überwachungsfahrzeug 200 ist ausgebildet um die Antwortreaktion zu erkennen, beispielsweise unter Verwendung einer Empfangseinrichtung 118. Dazu erfasst die Empfangseinrichtung 118 beispielsweise einen Abstand zu dem Fahrzeug 100 oder eine Geschwindigkeit des Fahrzeugs 100. Die Vorrichtung 110 ist ausgebildet, die tatsächliche Antwortreaktion des Fahrzeugs 100 mit der im Hinblick auf das Anregungsereignis zu erwartenden Antwortreaktion zu vergleichen. Dazu ist die Vorrichtung 110 beispielsweise ausgebildet, zumindest einen die tatsächliche Antwortreaktion charakterisierenden Parameterwert mit einem die erwartete Antwortreaktion charakterisierenden vorbestimmten Reaktionswert zu vergleichen.

Gemäß einem Ausführungsbeispiel ist die Vorrichtung 110 ausgebildet, um einen Typ des Fahrzeugs 100 zu erkennen und einen dem Typ zugeordneten vorbestimmten Reaktionswert zur Auswertung der tatsächlichen Antwortreaktion zu verwenden.

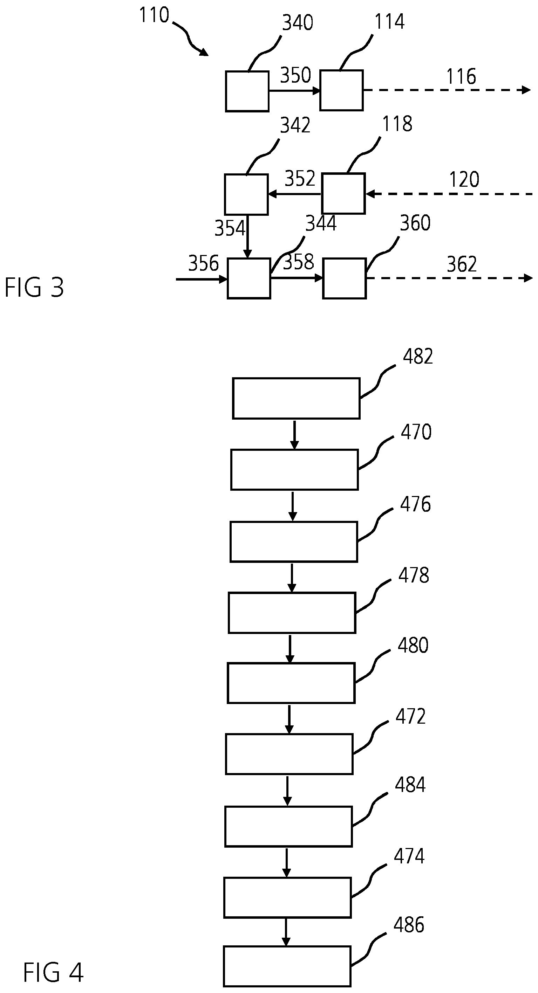

Figur 3 zeigt eine schematische Darstellung einer Vorrichtung 110 zum Überwachen einer Sensorik eines Fahrzeugs gemäß einem Ausführungsbeispiel. Dabei kann es sich um eine Vorrichtung 110 handeln, die beispielsweise in ein Überwachungsfahrzeug oder eine Infrastrukturanlage oder in das Fahrzeug, dessen Sensorik überwacht werden soll, integriert werden kann.

Die Vorrichtung 110 weist optional eine Bereitstellungseinrichtung 340, eine Ermittlungseinrichtung 342 und eine Bestimmungseinrichtung 344 auf. Die Bereitstellungseinrichtung 340 ist ausgebildet, um zum Beginn eines Überwachungsvorgangs ein Anregungssignal 350 bereitzustellen, das gemäß diesem Ausführungsbeispiel geeignet ist, um eine Sendeeinrichtung 114 so anzusteuern, dass die Sendeeinrichtung 114 ein Signal 116 aussendet, das ein von der Sensorik des Fahrzeugs sensierbares Anregungsereignis bewirkt. Das Anregungsereignis ist dabei so gestaltet, dass es eine erwartbare Antwortreaktion des Fahrzeugs hervorruft.

Eine Empfangseinrichtung 118 ist ausgebildet, um eine von dem Fahrzeug oder einer Infrastruktureinrichtung ausgehende Strahlung 120, oder allgemein eine Antwort, zu empfangen und ein die Strahlung 120 repräsentierendes Antwortsignal 352 an die Ermittlungseinrichtung 342 bereitzustellen. Durch eine geeignete Auswertung der Strahlung 120 kann die Antwortreaktion des Fahrzeugs erkannt und analysiert werden. Die Ermittlungseinrichtung 342 ist dazu ausgebildet, um unter Verwendung des Antwortsignals 352 einen Parameterwert 354 zu ermitteln, der einen erfassten Wert eines Parameters der Antwortreaktion repräsentiert. Gemäß diesem Ausführungsbeispiel ist die Bestimmungseinrichtung 344 ausgebildet, um den Parameterwert 354 und einen vorbestimmten Reaktionswert 356 zu verwenden, beispielsweise miteinander zu kombinieren oder zu vergleichen, um ein der Sensorik zuordenbares Überwachungssignal 358 zu bestimmen. Gemäß einem Ausführungsbeispiel ist die Bestimmungseinrichtung 344 ausgebildet, um den vorbestimmten Reaktionswert 356 als einen Wert auszuwählen, der auf die Art des Anregungsereignisses und/oder den Typ des Fahrzeugs, und somit auf die zu erwartende Antwortreaktion des Fahrzeugs und/oder der zu überwachenden Sensorik abgestimmt ist.

Gemäß diesem Ausführungsbeispiel ist eine Übertragungseinrichtung 360 ausgebildet, um eine von dem Überwachungssignal 358 beinhaltete Überwachungsinformation, gemäß diesem Ausführungsbeispiel einen Kalibrierwert 362, über eine Schnittstelle an die Sensorik zu übertragen. Die Sensorik kann ausgebildet sein, um den Kalibrierwert 362 zum Kalibrieren zu verwenden.

Gemäß einem Ausführungsbeispiel umfasst die Vorrichtung 110 zumindest eine der Einrichtungen 114, 118, 360.

Figur 4 zeigt ein Ablaufdiagramm eines Verfahrens zum Überwachen einer Sensorik eines Fahrzeugs gemäß einem Ausführungsbeispiel. Das Verfahren kann beispielsweise unter Verwendung einer anhand der vorangegangenen Figuren beschriebenen Vorrichtung ausgeführt werden.

Das Verfahren umfasst zumindest einen Schritt 470 des Bereitstellens eines Anregungssignals zum Bewirken eines Anregungsereignisses, einen Schritt 472 des Ermitteln eines Parameterwerts unter Verwendung eines Antwortsignals und einen Schritt 474 des Bestimmens eines der Sensorik zuordenbaren Überwachungssignals unter Verwendung des Parameterwerts und eines vorbestimmten Reaktionswerts. Gemäß einem Ausführungsbeispiel umfasst das Verfahren optional einen Schritt 476, in dem unter Verwendung des im Schritt 470 bereitgestellten Anregungssignals zumindest ein das Anregungsereignis bewirkendes Signal ausgesendet wird. Zusätzlich oder alternativ zu dem Schritt 476 wird optional ein Schritt 478 ausgeführt, in dem unter Verwendung des Anregungssignals eine Zustandsänderung eines sich im Umfeld des Fahrzeugs befindlichen Objekts ausgeführt wird, wobei das Anregungsereignis durch die Zustandsänderung bewirkt wird. In einer besonderen Ausführungsform stellt das im Umfeld des Fahrzeugs befindliche Objekt ein Testfeld oder einen geeigneten Kurvenverlauf dar, welcher insbesondere die Eignung zur Fahrspureinhaltung und/oder die adaptive Fahrbeleuchtungsnachführung diagnostiziert (nicht dargestellt).

Optional umfasst das Verfahren einen Schritt 480, in dem das Antwortsignal erfasst wird, dass anschließend im Schritt 472 weiterverwendet werden kann, um die Antwortreaktion des Fahrzeugs auszuwerten. Ebenfalls optional umfasst das Verfahren einen Schritt 482, in dem ein Typ des Fahrzeugs erkannt wird und einem Schritt 484, in dem unter Verwendung des Typs der vorbestimmter Reaktionswert ausgewählt wird, der im Schritt 474 des Bestimmens des Überwachungssignals verwendet wird. Beispielsweise wird der Schritt 482 zu Beginn des Verfahrens ausgeführt, so dass im Schritt 470 ein auf den Typ des Fahrzeugs abgestimmtes Anregungssignal und somit ein auf den Typ des Fahrzeugs abgestimmtes Anregungsereignis bewirkt werden kann.

Optional umfasst das Verfahren ferner einen Schritt 486, in dem das ein von dem Überwachungssignal umfasster Kalibrierwert zum Kalibrieren der Sensorik an eine Schnittstelle zu der Sensorik ausgesendet wird, beispielsweise über eine Funkschnittstelle.

Gemäß einem Ausführungsbeispiel umfasst das Verfahren nicht den einen Schritt 470 des Bereitstellens. Auch kann im Schritt 472 des Ermittelns der Parameterwert unter Verwendung des Antwortsignals ermittelt werden, wobei das Antwortsignal beispielsweise auch von einer Infrastruktureinrichtung ausgesendetes Signal oder Sensorsignale der Sensorik repräsentieren kann.

Umfasst ein Ausführungsbeispiel eine "und/oder" Verknüpfung zwischen einem ersten Merkmal und einem zweit Merkmal, so kann dies so gelesen werden, dass das Ausführungsbeispiel gemäß einer Ausführungsform sowohl das erste Merkmal als auch das zweiten Merkmal und gemäß einer weiteren Ausführungsform entweder nur das erste Merkmal oder nur das zweite Merkmal aufweist.

## Patentansprüche

1. Verfahren zum Überwachen und/oder Detektieren einer Sensorik (104) eines auf einer Straße fahrenden Fahrzeugs (100), wobei das Verfahren die folgenden Schritte umfasst:
Ermitteln (472) eines Parameterwerts (354) unter Verwendung eines Antwortsignals (352); und
Bestimmen (474) eines der Sensorik (104) zuordenbaren Überwachungssignals (358) unter Verwendung des Parameterwerts (354) und eines vorbestimmten Reaktionswerts (356), wobei der vorbestimmte Reaktionswert eine erwartete Intensitätsverteilung darstellt, die speziell für den Typ des Fahrzeugs (100) oder der Sensorik (104) abgespeichert ist, **dadurch gekennzeichnet, dass** das Antwortsignal (352) ausgesendete Sensorsignale der Sensorik (104) und der Parameterwert (354) eine Intensitätsverteilung der ausgesendeten Sensorsignale repräsentiert und im Schritt des Bestimmens unter Verwendung des Parameterwerts (354) und des vorbestimmten Reaktionswerts (356) ein Vorhandensein oder Nichtvorhandensein eines für ein zumindest teilautonomes Fahren erforderlichen Sensors der Sensorik (104) bestimmt wird, wobei der Parameterwert (354) mit dem vorbestimmten Reaktionswert verglichen wird und das Überwachungssignal (358) abhängig von dem Vorhandensein oder Nichtvorhandensein des erforderlichen Sensors einen Grad an autonomen Fahren des Fahrzeugs anzeigt und mit einem Schritt des Bereitstellen (470) eines Anregungssignals (350) zum Bewirken eines Anregungsereignisses (102), das eine die Sensorik (104) des Fahrzeugs (100) einbeziehende Antwortreaktion des Fahrzeugs (100) hervorruft, wobei die Antwortreaktion das Antwortsignal repräsentiert und der Parameterwert (354) einen erfassten Wert eines Parameters der Antwortreaktion repräsentiert .

2. Verfahren gemäß Anspruch 1, bei dem im Schritt (474) des Bestimmens das Überwachungssignal (358) einen Kalibrierwert (362) zum Kalibrieren der Sensorik (104) umfasst und/oder einen Zustand der Sensorik (104) anzeigt und/oder ein Vorhandensein der Sensorik anzeigt.

3. Verfahren gemäß einem der vorhergehenden Ansprüche, mit einem Schritt (476) des Aussendens zumindest eines das Anregungsereignis (102) bewirkenden akustischen und/oder elektromagnetischen Signals (116) unter Verwendung des Anregungssignals (350).

4. Verfahren gemäß Anspruch 3, bei dem im Schritt (476) des Aussendens als das Signal (116) ein Lichtimpuls in Richtung des Fahrzeugs (100) oder ein im Vorfeld des Fahrzeugs (100) erscheinender Licht-oder Strahlungswellenvorhang ausgesendet wird.

5. Verfahren gemäß einem der Ansprüche 3 bis 4, mit einem Schritt (478) des Ausführens einer das Anregungsereignis (102) bewirkenden Zustandsänderung eines sich im Umfeld des Fahrzeugs (100) befindlichen Objekts unter Verwendung des Anregungssignals (350).

6. Verfahren gemäß Anspruch 5, bei dem im Schritt (478) des Ausführens ein Bremsvorgang und/oder ein anderes Anregungsereignis (102) eines sich im Umfeld des Fahrzeugs (100) befindlichen Objekts in Form eines Überwachungsfahrzeugs (200) als die Zustandsänderung ausgeführt wird.

7. Verfahren gemäß einem der vorangegangenen Ansprüche, bei dem im Schritt (472) des Ermittelns der Parameterwert (354) als eine Geschwindigkeitsänderung des Fahrzeugs (100) oder als eine Charakteristik einer Nachführung einer adaptiven Fahrzeugbeleuchtung (130) des Fahrzeugs (100) ermittelt wird.

8. Verfahren gemäß einem der vorangegangenen Ansprüche, bei dem zumindest die Schritte (470, 472, 474) des Bereitstellens, Ermittelns und Bestimmens unter Verwendung einer in dem Fahrzeug (100), in einer Infrastrukturanlage (112), insbesondere einer Anlage zur Verkehrsüberwachung, oder in einem Überwachungsfahrzeug (200) anordenbaren Vorrichtung (110) ausgeführt werden.

9. Verfahren gemäß einem der vorangegangenen Ansprüche, bei dem das Antwortsignal (352) eine von dem Fahrzeug (100) ausgehende Strahlung (120) repräsentiert und das Verfahren einen Schritt (480) des Erfassens des Antwortsignals (352) umfasst, wobei die von dem Fahrzeug (100) ausgehende Strahlung (120) eine von dem Fahrzeug (100) ausgesendete und/oder reflektierte Strahlung repräsentiert.

10. Verfahren gemäß einem der vorangegangenen Ansprüche, mit einem Schritt (482) des Erkennens eines Typs des Fahrzeugs (100) und einem Schritt (484) des Auswählens des Reaktionswerts (356) unter Verwendung des Typs.

11. Vorrichtung (110) zum Überwachen einer Sensorik (104) eines Fahrzeugs (100), wobei die Vorrichtung (110) eingerichtet ist, um die Schritte des Verfahrens gemäß einem der vorangegangenen Ansprüche auszuführen und/oder anzusteuern.

12. Infrastrukturanlage (112) mit einer Vorrichtung (110) gemäß Anspruch 11.

## Claims

1. Method for monitoring and/or detecting a sensor system (104) of a vehicle (100) traveling on a road, wherein the method comprises the following steps:
calculating (472) a parameter value (354) using a response signal (352); and
determining (474) a monitoring signal (358) able to be assigned to the sensor system (104) using the parameter value (354) and a predetermined reaction value (356), wherein the predetermined reaction value represents an expected intensity distribution that is stored specifically for the type of the vehicle (100) or of the sensor system (104), **characterized in that** the response signal (352) represents emitted sensor signals from the sensor system (104) and the parameter value (354) represents an intensity distribution of the emitted sensor signals, and, in the determination step, presence or absence of a sensor, required for at least partly autonomous driving, of the sensor sys-tem (104) is determined using the parameter value (354) and the predetermined reac-tion value (356), wherein the parameter value (354) is compared with the predeter-mined reaction value and the monitoring signal (358) indicates a degree of autono-mous driving of the vehicle depending on the presence or absence of the required sen-sor, and having a step of providing (470) an excitation signal (350) in order to cause an excitation event (102) that triggers a response reaction of the vehicle (100) that involves the sensor system (104) of the vehicle (100), wherein the response reaction represents the response signal and the parameter value (354) represents a recorded value of a parameter of the response reaction.

2. Method according to Claim 1, in which, in the determination step (474), the monitoring signal (358) comprises a calibration value (362) for calibrating the sensor system (104) and/or indicates a state of the sensor system (104) and/or presence of the sensor system.

3. Method according to either of the preceding claims, having a step (476) of emitting at least one acoustic and/or electromagnetic signal (116) causing the excitation event (102) using the excitation signal (350).

4. Method according to Claim 3, in which, in the emission step (476), a light pulse is emitted in the direction of the vehicle (100) or a light or radiation wave cur-tain appearing in front of the vehicle (100) is emitted as the signal (116).

5. Method according to one of Claims 3 to 4, having a step (478) of performing a change of state, which causes the excitation event (102), of an object located in the surroundings of the vehicle (100) using the excitation signal (350).

6. Method according to Claim 5, in which, in the performance step (478), a brak-ing procedure and/or another excitation event (102) of an object in the form of a mon-itoring vehicle (200) located in the surroundings of the vehicle (100) is performed as the change of state.

7. Method according to one of the preceding claims, in which, in the calculation step (472), the parameter value (354) is calculated as a change of speed of the vehicle (100) or as a characteristic of tracking of an adaptive vehicle lighting system (130) of the vehicle (100).

8. Method according to one of the preceding claims, in which at least the provi-sion, calculation and determination steps (470, 472, 474) are performed using a device (110) able to be arranged in the vehicle (100), in an infrastructure system (112), in particular a traffic monitoring system, or in a monitoring vehicle (200).

9. Method according to one of the preceding claims, in which the response signal (352) represents radiation (120) emanating from the vehicle (100) and the method comprises a step (480) of recording the response signal (352), wherein the radiation (120) emanating from the vehicle (100) represents radiation emitted and/or reflected by the vehicle (100).

10. Method according to one of the preceding claims, having a step (482) of iden-tifying a type of the vehicle (100) and a step (484) of selecting the reaction value (356) using the type.

11. Device (110) for monitoring a sensor system (104) of a vehicle (100), wherein the device (110) is set up to carry out and/or actuate the steps of the method according to one of the preceding claims.

12. Infrastructure system (112) having a device (110) according to Claim 11.

## Revendications

1. Procédé de surveillance et/ou de détection d'un ensemble de capteurs (104) d'un véhicule (100) circulant sur une route, le procédé comprenant les étapes suivantes :
la détermination (472) d'une valeur de paramètre (354) en utilisant un signal de réponse (352) ; et
la détermination (474) d'un signal de surveillance (358) pouvant être associé à l'ensemble de capteurs (104) en utilisant la valeur de paramètre (354) et une valeur de réaction prédéterminée (356), la valeur de réaction prédéterminée représentant une répartition d'intensité attendue qui est stockée spécifiquement pour le type du véhicule (100) ou de l'ensemble de capteurs (104), **caractérisé en ce que** le signal de réponse (352) représente des signaux de capteurs émis de l'ensemble de capteurs (104) et la valeur de paramètre (354) représente une répartition d'intensité des signaux de capteurs émis et, lors de l'étape de détermination, en utilisant la valeur de paramètre (354) et la valeur de réaction prédéterminée (356), la présence ou l'absence d'un capteur de l'ensemble de capteurs (104) requis pour une conduite au moins partiellement autonome est déterminée, la valeur de paramètre (354) étant comparée à la valeur de réaction prédéterminée et le signal de surveillance (358) indiquant, en fonction de la présence ou de l'absence du capteur requis, un degré de conduite autonome du véhicule et comprenant étape de mise à disposition (470) d'un signal d'excitation (350) pour provoquer un événement d'excitation (102) qui provoque une réaction de réponse du véhicule (100) impliquant l'ensemble de capteurs (104) du véhicule (100), la réaction de réponse représentant le signal de réponse et la valeur de paramètre (354) représentant une valeur détectée d'un paramètre de la réaction de réponse.

2. Procédé selon la revendication 1, dans lequel, à l'étape (474) de détermination, le signal de surveillance (358) comprend une valeur d'étalonnage (362) pour étalonner l'ensemble de capteurs (104) et/ou indique un état de l'ensemble de capteurs (104) et/ou indique une présence de l'ensemble de capteurs.

3. Procédé selon l'une des revendications précédentes, comprenant une étape (476) d'émission d'au moins un signal acoustique et/ou électromagnétique (116) provoquant l'événement d'excitation (102) en utilisant le signal d'excitation (350).

4. Procédé selon la revendication 3, dans lequel, lors de l'étape (476) d'émission, en tant que signal (116), une impulsion lumineuse est émise en direction du véhicule (100) ou un rideau d'ondes lumineuses ou de rayonnement apparaissant en amont du véhicule (100) est émis.

5. Procédé selon l'une des revendications 3 ou 4, comprenant une étape (478) d'exécution d'un changement d'état d'un objet se trouvant dans l'environnement du véhicule (100) provoquant l'événement d'excitation (102) en utilisant le signal d'excitation (350).

6. Procédé selon la revendication 5, dans lequel, lors de l'étape (478) d'exécution, un processus de freinage et/ou un autre événement d'excitation (102) d'un objet se trouvant dans l'environnement du véhicule (100) sous la forme d'un véhicule de surveillance (200) est exécuté en tant que changement d'état.

7. Procédé selon l'une des revendications précédentes, dans lequel, lors de l'étape (472) de détermination, la valeur de paramètre (354) est déterminée en tant que changement de vitesse du véhicule (100) ou en tant que caractéristique d'un suivi d'un éclairage de véhicule adaptatif (130) du véhicule (100).

8. Procédé selon l'une des revendications précédentes, dans lequel au moins les étapes (470, 472, 474) de mise à disposition, de détermination et de détermination sont exécutées en utilisant un dispositif (110) pouvant être disposé dans le véhicule (100), dans une installation d'infrastructure (112), en particulier une installation de surveillance du trafic, ou dans un véhicule de surveillance (200).

9. Procédé selon l'une des revendications précédentes, dans lequel le signal de réponse (352) représente un rayonnement (120) provenant du véhicule (100) et le procédé comprend une étape (480) d'acquisition du signal de réponse (352), le rayonnement (120) provenant du véhicule (100) représentant un rayonnement émis et/ou réfléchi par le véhicule (100).

10. Procédé selon l'une des revendications précédentes, comprenant une étape (482) de reconnaissance d'un type du véhicule (100) et une étape (484) de sélection de la valeur de réaction (356) en utilisant le type.

11. Dispositif (110) de surveillance d'un ensemble de capteurs (104) d'un véhicule (100), le dispositif (110) étant configuré pour exécuter et/ou commander les étapes du procédé selon l'une des revendications précédentes.

12. Installation d'infrastructure (112) comprenant un dispositif (110) selon la revendication 11.
